# EUROPEAN PATENT SPECIFICATION

(11) **EP 4 287 480 B1**
(45) Date of publication and mention of the grant of the patent: **26.11.2025**
(21) Application number: 22770440.0
(22) Date of filing: 14.03.2022
(51) Int. Cl.: H02M 3/07, H02J 7/00

(54) **VOLTAGE CONVERSION CIRCUIT, CHARGING MANAGEMENT MODULE, AND ELECTRONIC DEVICE**
SPANNUNGSWANDLERSCHALTUNG, LADEVERWALTUNGSMODUL UND ELEKTRONISCHE VORRICHTUNG
CIRCUIT DE CONVERSION DE TENSION, MODULE DE GESTION DE CHARGE ET DISPOSITIF ÉLECTRONIQUE

(30) Priority: 19.03.2021 CN 202110297238
(43) Date of publication of application: 06.12.2023
(73) Proprietor: Huawei Technologies Co., Ltd., Shenzhen, Guangdong 518129 (CN)
(72) Inventor: HOU, Qinghui, Shenzhen, Guangdong 518129 (CN); YANG, Chengjun, Shenzhen, Guangdong 518129 (CN); ZHANG, Xialing, Shenzhen, Guangdong 518129 (CN)
(74) Representative: Körber, Martin Hans
(86) International application number: PCT/CN2022/080621
(87) International publication number: WO 2022/194085

(56) References cited:
- EP-A1- 3 691 100
- WO-A1-2023/113195
- CN-A- 101 119 064
- CN-A- 102 255 362
- CN-A- 105 406 709
- CN-A- 109 429 540
- CN-A- 113 783 417
- US-A1- 2020 328 676
- US-A1- 2021 099 085
- LAU KIN KEUNG JEFF ET AL: "A Novel 4-to-1 Switched-Capacitor Converter", 2021 IEEE APPLIED POWER ELECTRONICS CONFERENCE AND EXPOSITION (APEC), IEEE, 14 June 2021 (2021-06-14), pages 2003 - 2010, XP033944543, DOI: 10.1109/APEC42165.2021.9487316

## Description

### TECHNICAL FIELD

This application relates to the field of electronic technologies, and in particular, to a voltage conversion circuit, a charging management module, and an electronic device.

### BACKGROUND

With development of electronic technologies, performance requirements for a voltage converter are increasingly high. For example, in the field of mobile phones, fast full charging is a solution to short battery life, and fast charging means an increase in a charging current. For a larger charging current, a voltage converter with a voltage gain of 4:1 may be used.

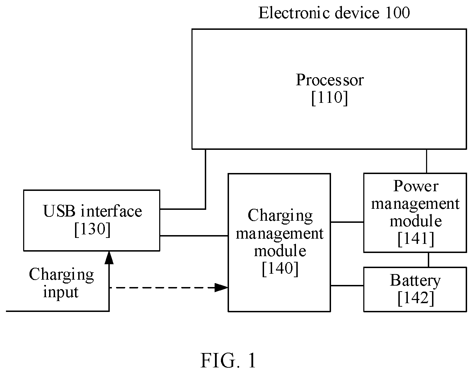

For example, as shown in FIG. 1, currently, a Dickson Dickson converter can implement a voltage gain of 4:1 and has high efficiency. However, current distribution in a circuit of the converter is uneven, causing a severe heat generation problem of some transistors in a large current output scenario.

EP 3 691 100 A1 refers to a (2N+1)-to-1 switched converter.

### SUMMARY

A voltage conversion circuit, a charging management module, and an electronic device are provided, to resolve a severe heat generation problem caused by uneven current distribution. The application is set out in the appended set of claims.

According to a first aspect, a voltage conversion circuit is provided, including: a first switch unit, where a first end of the first switch unit is electrically connected to an input end; a second switch unit, where a first end of the second switch unit is electrically connected to a second end of the first switch unit; a first capacitor unit, where a first end of the first capacitor unit is electrically connected to the second end of the first switch unit; a second capacitor unit, where a first end of the second capacitor unit is electrically connected to a second end of the second switch unit; a third switch unit, where a first end of the third switch unit is electrically connected to a second end of the first capacitor unit; a fourth switch unit, where a first end of the fourth switch unit is electrically connected to the second end of the first capacitor unit, and a second end of the fourth switch unit is electrically connected to a ground end; a fifth switch unit, where a first end of the fifth switch unit is electrically connected to a second end of the third switch unit; a third capacitor unit, where a first end of the third capacitor unit is electrically connected to the second end of the third switch unit; a sixth switch unit, where a first end of the sixth switch unit is electrically connected to a second end of the third capacitor unit, and a second end of the sixth switch unit is electrically connected to a second end of the fifth switch unit; a seventh switch unit, where a first end of the seventh switch unit is electrically connected to the second end of the third capacitor unit, and a second end of the seventh switch unit is electrically connected to the ground end; an eighth switch unit, where a first end of the eighth switch unit is electrically connected to the second end of the second switch unit, and a second end of the eighth switch unit is electrically connected to an output end; a ninth switch unit, where a first end of the ninth switch unit is electrically connected to a second end of the second capacitor unit, and a second end of the ninth switch unit is electrically connected to the output end and electrically connected to the second end of the fifth switch; and a tenth switch unit, where a first end of the tenth switch unit is electrically connected to the second end of the second capacitor unit, and a second end of the tenth switch unit is electrically connected to the ground end.

The voltage conversion circuit is configured such that, when the voltage conversion circuit is in a working state, the voltage conversion circuit works in a plurality of cyclic time periods. Each time period sequentially includes a first time period and a second time period. In the first time period, the first switch unit, the third switch unit, the sixth switch unit, the eighth switch unit, and the tenth switch unit are turned on, and the second switch unit, the fourth switch unit, the fifth switch unit, the seventh switch unit, and the ninth switch unit are turned off. In the second time period, the first switch unit, the third switch unit, the sixth switch unit, the eighth switch unit, and the tenth switch unit are turned off, and the second switch unit, the fourth switch unit, the fifth switch unit, the seventh switch unit, and the ninth switch unit are turned on.

In a possible implementation, the first switch unit, the second switch unit, the third switch unit, the fourth switch unit, the fifth switch unit, the sixth switch unit, the seventh switch unit, the eighth switch unit, the ninth switch unit, and the tenth switch unit are metal-oxide-semiconductor field-effect transistors MOSFETs, gallium nitride GaN transistors, silicon carbide SiC transistors, insulated gate bipolar transistors IGBTs, or relays.

In a possible implementation, the voltage conversion circuit further includes an anti-backflow transistor connected in series between the input end and the first switch unit, where a direction of a parasitic diode of the anti-backflow transistor is a first direction, a direction of a parasitic diode of the first switch unit is a second direction, and the first direction is opposite to the second direction.

According to a second aspect, a charging management module is provided, including the foregoing voltage conversion circuit, where an output end of the voltage conversion circuit is electrically connected to a battery charging/discharging end; and a charging control unit, where the charging control unit is electrically connected to a control end of each switch unit in the voltage conversion circuit, and the charging control unit is configured to control the voltage conversion circuit to be in a working state or a non-working state.

In a possible implementation, when the voltage conversion circuit is in the non-working state, the charging control unit is configured to provide a cutoff electrical level for the control ends of the first switch unit, the second switch unit, the third switch unit, the fourth switch unit, the fifth switch unit, the sixth switch unit, the seventh switch unit, the eighth switch unit, the ninth switch unit, and the tenth switch unit.

In a possible implementation, the charging management module further includes: a charging circuit, where the charging circuit is electrically connected to an input end, the battery charging/discharging end, a system working voltage end, and the charging control unit. The charging control unit is configured to control, in a constant current charging mode, the voltage conversion circuit to be in the working state. The charging control unit is further configured to control, in a constant voltage charging mode, the voltage conversion circuit to be in the non-working state, and the charging circuit to provide a charging voltage for the battery charging/discharging end.

In a possible implementation, the charging management module further includes: a charging circuit, where the charging circuit is electrically connected to an input end, the battery charging/discharging end, and the charging control unit. The charging control unit is configured to control, in a constant current charging mode and when a charging current is greater than a preset value, the voltage conversion circuit to be in the working state. The charging control unit is further configured to control, in the constant current charging mode, when the charging current is not greater than the preset value, and in a constant voltage charging mode, the voltage conversion circuit to be in the non-working state and the charging circuit to provide a charging voltage for the battery charging/discharging end.

In a possible implementation, the charging circuit is further electrically connected to the system working voltage end, and the charging circuit is further configured to provide a working voltage for the system working voltage end.

According to a third aspect, an electronic device is provided, including the foregoing voltage conversion circuit or the foregoing charging management module.

According to the voltage conversion circuit, the charging management module, and the electronic device in embodiments of this application, a connection relationship between a switch unit and a capacitor unit makes currents distribute more evenly in a working process of the voltage conversion circuit. Therefore, a severe heat generation problem caused by uneven current distribution is resolved, a conduction loss is reduced, and a withstand voltage of the capacitor unit is lowered, thereby reducing a volume of the capacitor unit, and improving space utilization.

### BRIEF DESCRIPTION OF DRAWINGS

FIG. 1 is a structural block diagram of an electronic device;
FIG. 2 is a schematic diagram of a topology of a circuit of a Dickson Dickson converter in a conventional technology;
FIG. 3 is a schematic diagram of an equivalent circuit in which the circuit in FIG. 2 includes a transistor in a first time period;
FIG. 4 is a schematic diagram of an equivalent circuit in which the transistor is omitted in FIG. 3;
FIG. 5 is a schematic diagram of an equivalent circuit in which the circuit in FIG. 2 includes a transistor in a second time period;
FIG. 6 is a schematic diagram of an equivalent circuit in which the transistor is omitted in FIG. 5;
FIG. 7 is a schematic diagram of a topology of a voltage conversion circuit according to an embodiment of this application;
FIG. 8 is a schematic diagram of an equivalent circuit in which the circuit in FIG. 7 includes a transistor in a first time period;
FIG. 9 is a schematic diagram of an equivalent circuit in which the transistor is omitted in FIG. 8;
FIG. 10 is a schematic diagram of an equivalent circuit in which the circuit in FIG. 7 includes a transistor in a second time period;
FIG. 11 is a schematic diagram of an equivalent circuit in which the transistor is omitted in FIG. 10;
FIG. 12 is a time sequence diagram of a control signal of a voltage conversion circuit according to an embodiment of this application;
FIG. 13 is a simulation waveform diagram of a part of a structure of a voltage conversion circuit according to an embodiment of this application;
FIG. 14 is a simulation waveform diagram of another part of a structure of a voltage conversion circuit according to an embodiment of this application;
FIG. 15 is a simulation waveform diagram of another part of a structure of a voltage conversion circuit according to an embodiment of this application;
FIG. 16 is a schematic diagram of loss comparison between an embodiment of this application and a conventional technology;
FIG. 17 is a schematic diagram of a topology of another voltage conversion circuit according to an embodiment of this application; and
FIG. 18 is a schematic structural diagram of another electronic device according to an embodiment of this application.

### DESCRIPTION OF EMBODIMENTS

Terms used in embodiments of this application are only used to explain specific embodiments of this application, but are not intended to limit this application.

Before embodiments of this application are described, a scenario in embodiments of this application is first described. Embodiments of this application may be applied to a scenario in which an electronic device receives external charging input or provides charging output. The electronic device in this application may be a mobile phone, a tablet, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, an in-vehicle device, an uncrewed aerial vehicle device, a smart vehicle, a smart stereo, a robot, smart glasses, and the like.

For example, as shown in FIG. 1, an electronic device 100 may include a processor 110, a charging management module 140, a power management module 141, and a battery 142. It may be understood that a schematic structure in embodiments of this application does not constitute a specific limitation on the electronic device 100. In some other embodiments of this application, the electronic device 100 may include more or fewer components than components shown in the figure, or some components may be combined, or some components may be split, or different component arrangements may be applied. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. The different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that are just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A USB interface 130 is an interface that conforms to a USB standard specification, and may be specifically a mini USB interface, a micro USB interface, a USB type-C interface, and the like. The USB interface 130 may be configured to be connected to a charger to charge the electronic device 100, or may be configured to exchange data between the electronic device 100 and a peripheral device, or may be configured to be connected to a headset for playing audio through the headset. The interface may be further configured to be connected to another electronic device like an AR device.

It may be understood that an interface connection relationship between the modules that is shown in embodiments is merely an example for description, and does not constitute a limitation on a structure of the electronic device 100. In some other embodiments of this application, the electronic device 100 may alternatively use an interface connection manner different from the interface connection manners in the foregoing embodiments, or use a combination of a plurality of interface connection manners.

The charging management module 140 is configured to receive charging input from the charger. The charger may be a wireless charger or a wired charger. In some embodiments of wired charging, the charging management module 140 may receive charging input of a wired charger through the USB interface 130. In some embodiments of wireless charging, the charging management module 140 may receive wireless charging input through a wireless charging coil of the electronic device 100 (a dotted arrow in FIG. 1 shows a direction of the wireless charging input). The charging management module 140 may supply power to an electronic device through the power management module 141 while charging the battery 142. In addition, in another possible implementation, the electronic device 100 may also provide reverse charging externally through the charging management module 140.

The power management module 141 is configured to be connected to the battery 142, the charging management module 140, and the processor 110. The power management module 141 receives an input from the battery 142 and/or the charging management module 140, and supplies power to the processor 110, an internal memory 121, a display 194, a camera 193, a wireless communication module 160, and the like. The power management module 141 may be further configured to monitor parameters such as a battery capacity, a battery cycle count, and a battery health status (electric leakage and impedance). In some other embodiments, the power management module 141 may alternatively be disposed in the processor 110. In some other embodiments, the power management module 141 and the charging management module 140 may alternatively be disposed in a same component.

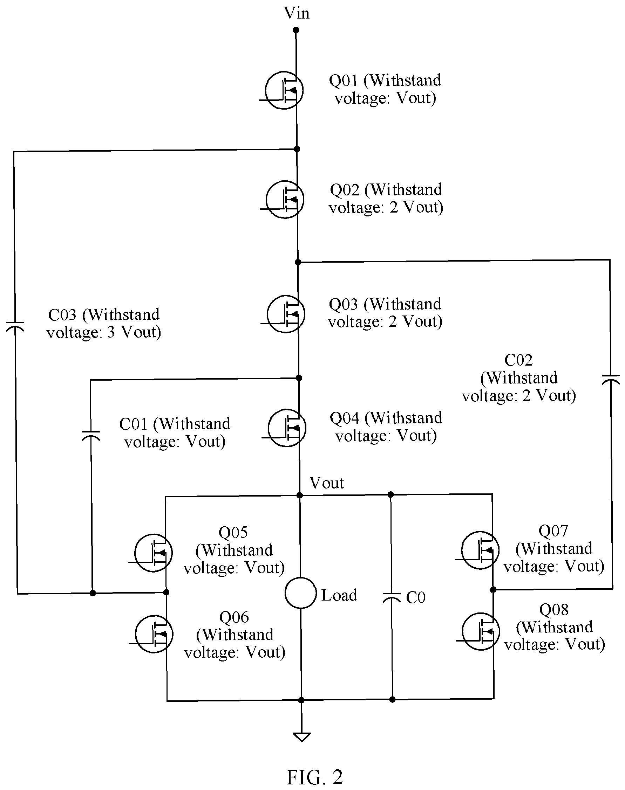

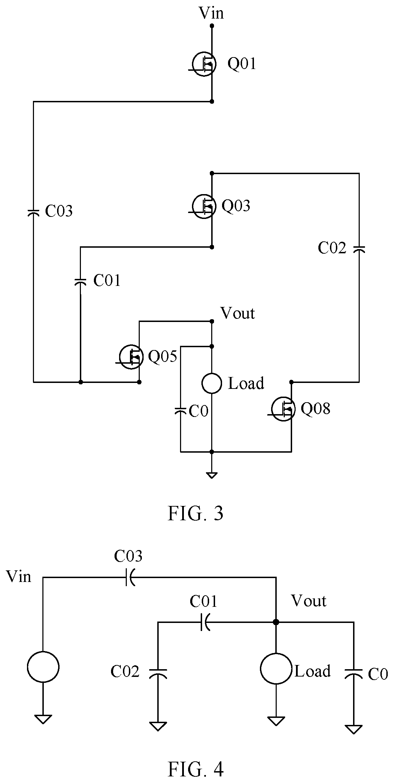

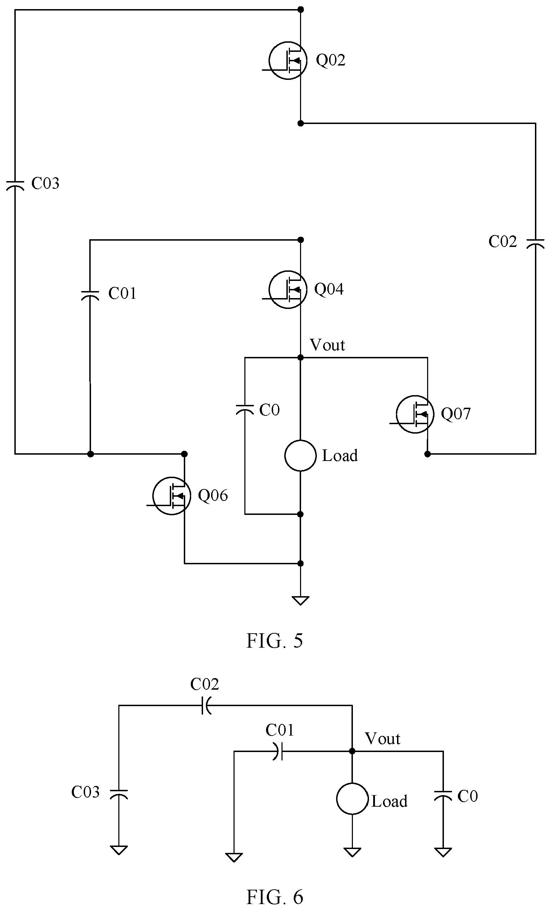

Before embodiments of this application are described, a technical problem in a conventional technology is first described. As shown in FIG. 2 to FIG. 6, a Dickson converter includes eight transistors Q01 to Q08, three capacitors C01 to C03, and an output filter capacitor C0. The Dickson converter works in a plurality of cyclic time periods, and each time period sequentially includes a first time period and a second time period. In the first time period, Q01, Q03, Q05, and Q08 are turned on, and Q02, Q04, Q06, and Q07 are turned off. In the second time period, Q01, Q03, Q05, and Q08 are turned off, and Q02, Q04, Q06, and Q07 are turned on. In a switching process of the two time periods, voltage conversion may be implemented, and an input voltage Vin of an input end is converted into an output voltage Vout of an output end. Withstand voltages of Q01, Q04, Q05, Q06, Q07, and Q08 are Vout, and withstand voltages of Q02 and Q03 are twice Vout. Based on circuit analysis, it can be learned that as shown in FIG. 3 and FIG. 4, in the first time period, currents of two branches in which C03 and C01 are located each pass through Q05. As shown in FIG. 5 and FIG. 6, in the second time period, the currents of the two branches in which C03 and C01 are located each pass through Q06. Therefore, in an entire working process of alternating the first time period and the second time period, an average current passing through Q05 or Q06 is twice an average current passing through another transistor. In other words, current distribution is uneven, and consequently the two transistors Q05 and Q06 generate excessive heat. A conduction loss of a transistor depends on impedance, and the impedance is positively correlated with a current value. Therefore, a large current on Q05 and Q06 causes a high conduction loss. To resolve the foregoing problem, technical solutions in embodiments of this application are provided. The following describes the technical solutions in embodiments of this application.

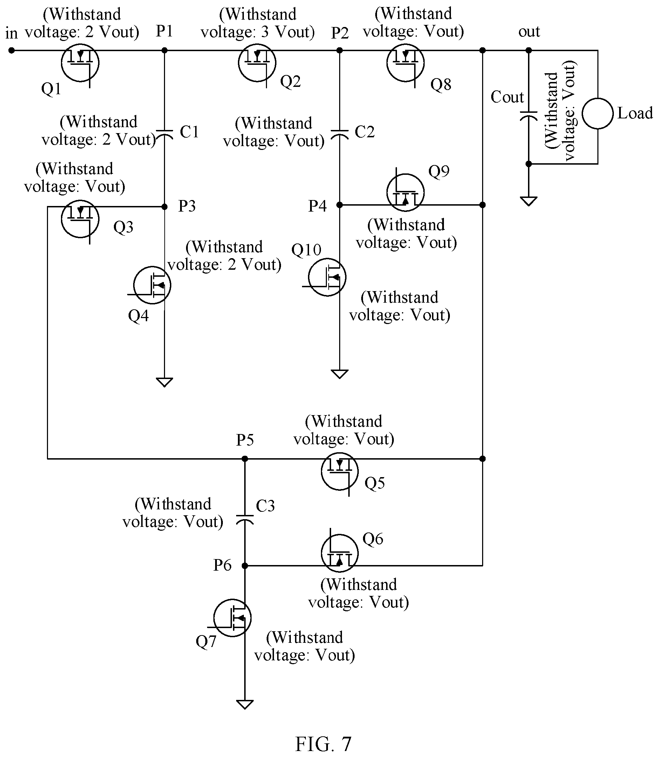

An embodiment of this application provides a voltage conversion circuit. The voltage conversion circuit may be a circuit in the charging management module 140. As shown in FIG. 7, the voltage conversion circuit includes: a first switch unit Q1, where a first end of the first switch unit Q1 is electrically connected to an input end in; a second switch unit Q2, where a first end of the second switch unit Q2 is electrically connected to a second end of the first switch unit Q1; a first capacitor unit C1, where a first end of the first capacitor unit C1 is electrically connected to the second end of the first switch unit Q1; a second capacitor unit C2, where a first end of the second capacitor unit C2 is electrically connected to a second end of the second switch unit Q2; a third switch unit Q3, where a first end of the third switch unit Q3 is electrically connected to a second end of the first capacitor unit C1; a fourth switch unit Q4, where a first end of the fourth switch unit Q4 is electrically connected to the second end of the first capacitor unit C1, and a second end of the fourth switch unit Q4 is electrically connected to a ground end; a fifth switch unit Q5, where a first end of the fifth switch unit Q5 is electrically connected to a second end of the third switch unit Q3; a third capacitor unit C3, where a first end of the third capacitor unit C3 is electrically connected to the second end of the third switch unit Q3; a sixth switch unit Q6, where a first end of the sixth switch unit Q6 is electrically connected to a second end of the third capacitor unit C3, and a second end of the sixth switch unit Q6 is electrically connected to a second end of the fifth switch unit Q5; a seventh switch unit Q7, where a first end of the seventh switch unit Q7 is electrically connected to the second end of the third capacitor unit C3, and a second end of the seventh switch unit Q7 is electrically connected to the ground end; an eighth switch unit Q8, where a first end of the eighth switch unit Q8 is electrically connected to the second end of the second switch unit Q2, and a second end of the eighth switch unit Q8 is electrically connected to an output end out; a ninth switch unit Q9, where a first end of the ninth switch unit Q9 is electrically connected to a second end of the second capacitor unit C2, and a second end of the ninth switch unit Q9 is electrically connected to the output end out; and a tenth switch unit Q10, where a first end of the tenth switch unit Q10 is electrically connected to the second end of the second capacitor unit C2, and a second end of the tenth switch unit Q10 is electrically connected to the ground end. The following describes a circuit topology structure by introducing connection nodes between units. The first switch unit Q1 is connected in series between the input end in and a first node P1. The second switch unit Q2 is connected in series between the first node P1 and a second node P2. The first capacitor unit C1 is connected in series between the first node P1 and a third node P3. The second capacitor unit C2 is connected in series between the second node P2 and a fourth node P4. The third switch unit Q3 is connected in series between the third node P3 and a fifth node P5. The fourth switch unit Q4 is connected in series between the third node P3 and the ground end. The fifth switch unit Q5 is connected in series between the fifth node P5 and the output end out. The third capacitor unit C3 is connected in series between the fifth node P5 and a sixth node P6. The sixth switch unit Q6 is connected in series between the sixth node P6 and the output end out. The seventh switch unit Q7 is connected in series between the sixth node P6 and the ground end. The eighth switch unit Q8 is connected in series between the second node P2 and the output end out. The ninth switch unit Q9 is connected in series between the fourth node P4 and the output end out. The tenth switch unit Q10 is connected in series between the fourth node P4 and the ground end. In addition, an output capacitance Cout and a load are further shown in FIG. 7. The output capacitance Cout is connected in series between the output end out and the ground end, and is configured to implement output filtering. The voltage conversion circuit is configured to convert an input voltage Vin of the input end in into an output voltage Vout of the output end out. The output voltage Vout is configured to be provided for the load. The load may be, for example, a battery or another component.

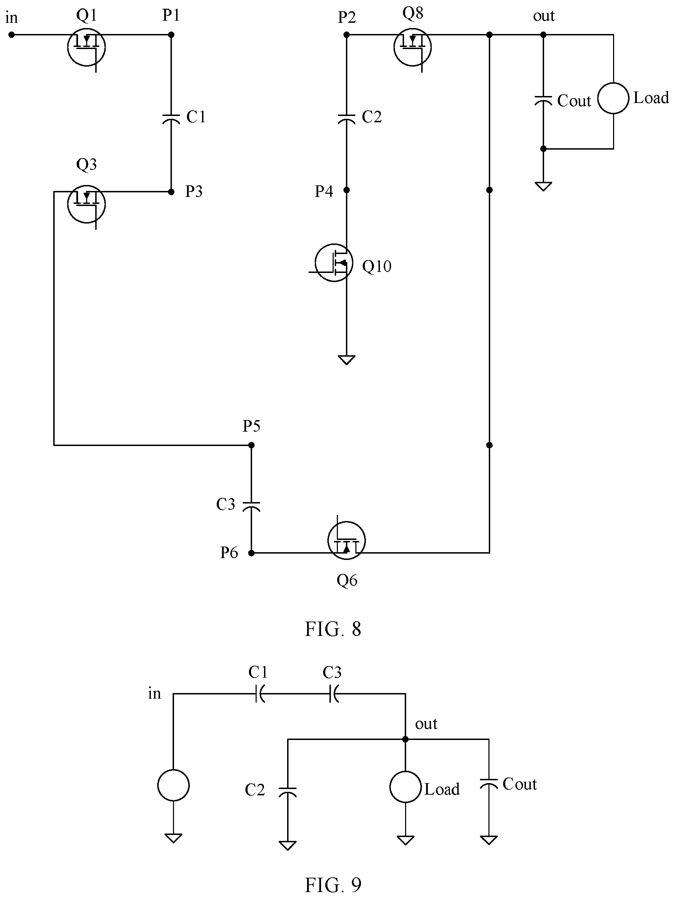

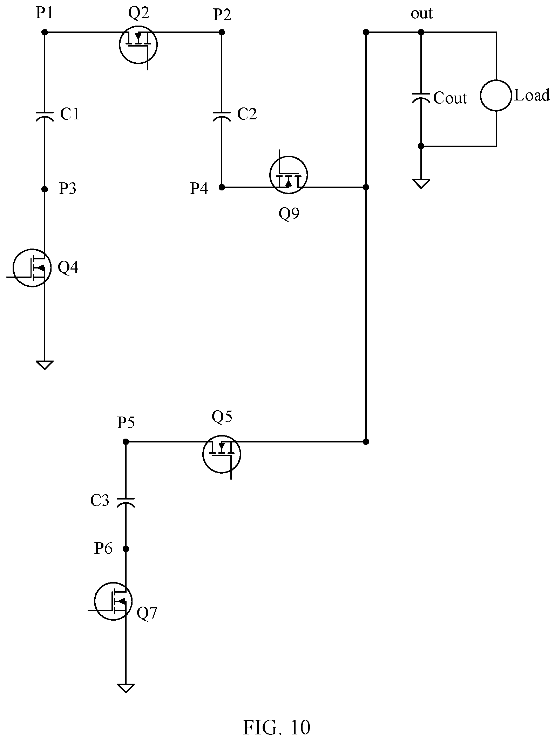

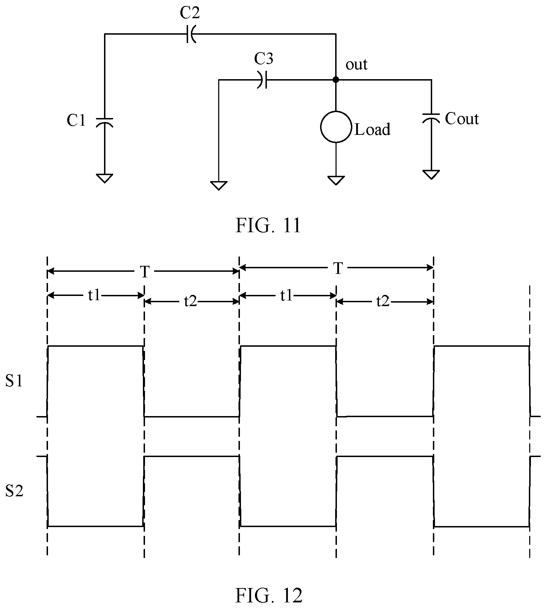

Specifically, as shown in FIG. 8 to FIG. 12, when in a working state, the voltage conversion circuit works in a plurality of cyclic time periods T. Each time period T sequentially includes a first time period t1 and a second time period t2. In the first time period t1, the first switch unit Q1, the third switch unit Q3, the sixth switch unit Q6, the eighth switch unit Q8, and the tenth switch unit Q10 are turned on, and the second switch unit Q2, the fourth switch unit Q4, the fifth switch unit Q5, the seventh switch unit Q7, and the ninth switch unit Q9 are turned off. In the second time period t2, the first switch unit Q1, the third switch unit Q3, the sixth switch unit Q6, the eighth switch unit Q8, and the tenth switch unit Q10 are turned off, and the second switch unit Q2, the fourth switch unit Q4, the fifth switch unit Q5, the seventh switch unit Q7, and the ninth switch unit Q9 are turned on. In FIG. 8 and FIG. 10, each switch unit in a turn-off state is omitted. It is assumed that each switch unit is an N-type transistor. In FIG. 12, S1 represents a control signal output to gates of the first switch unit Q1, the third switch unit Q3, the sixth switch unit Q6, the eighth switch unit Q8, and the tenth switch unit Q10, and S2 represents a control signal output to gates of the second switch unit Q2, the fourth switch unit Q4, the fifth switch unit Q5, the seventh switch unit Q7, and the ninth switch unit Q9. For the N-type transistor, a high electrical level is a conductive electrical level, and may control a corresponding transistor to be turned on, and a low electrical level is a cutoff electrical level, and may control the corresponding transistor to be turned off. In other words, the signal S1 shown in FIG. 12 is used to control the first switch unit Q1, the third switch unit Q3, the sixth switch unit Q6, the eighth switch unit Q8, and the tenth switch unit Q10 to be turned on in the first time period t1 and to be turned off in the second time period t2. The signal S2 is used to control the second switch unit Q2, the fourth switch unit Q4, the fifth switch unit Q5, the seventh switch unit Q7, and the ninth switch unit Q9 to be turned off in the first time period t1 and to be turned on in the second time period t2. Theoretically, S1 and S2 are signals complementary to each other, and have a same duty factor. Theoretically, the duty factor is 50% when there is no dead zone. If a dead zone is included, for example, a duty factor of the dead zone is 2%, the duty factor of S1 is 49%, and the duty factor of S2 is 49%. The dead zone refers to an interval in which both S1 and S2 do not reach a conductive electrical level. It should be noted that the control signals shown in FIG. 12 are merely an example. This is not limited in embodiments of this application. A control signal is related to a type of a transistor. For example, if the second switch unit Q2 is a P-type transistor, a control signal corresponding to the second switch unit Q2 may be S1 in FIG. 12. For the P-type transistor, a low electrical level is a conductive electrical level, and a high electrical level is a cutoff electrical level. Therefore, when S1 is used as a gate control signal, the second switch unit Q2 of the P-type transistor may be turned on in the first time period t1 and turned off in the second time period t2. In other words, a type of the switch unit and a specific time sequence of the control signal are not limited in embodiments of this application, provided that the switch unit can be correspondingly turned on and turned off in the first time period t1 and the second time period t2. In addition, it should be noted that the voltage conversion circuit in embodiments of this application may exchange functions of the input end in and the output end out for use. In other words, the voltage conversion circuit may convert a voltage conversion of 4:1 into a voltage conversion of 1:4. For example, when used in an electronic device, in addition to a function of converting, during normal operation, an external input voltage for charging, the voltage conversion circuit may alternatively reversely convert a voltage of a battery and output the voltage to the outside for reverse charging.

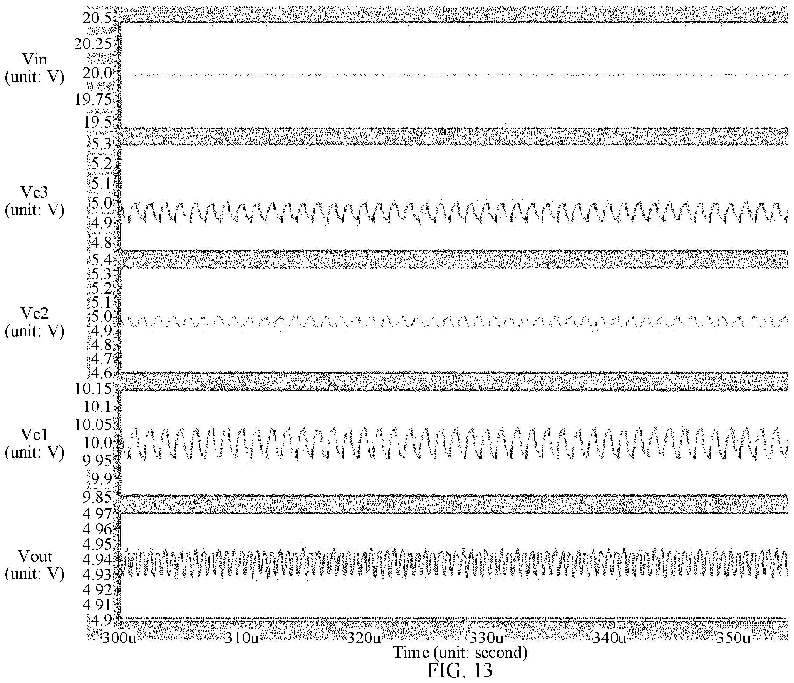

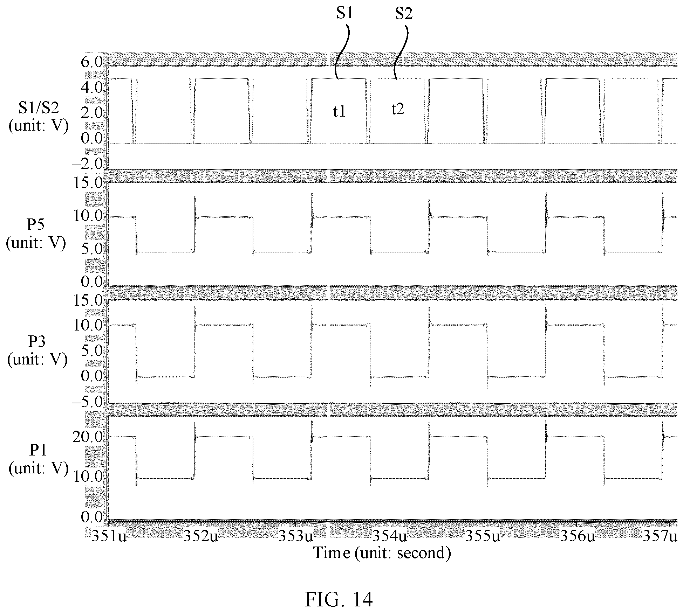

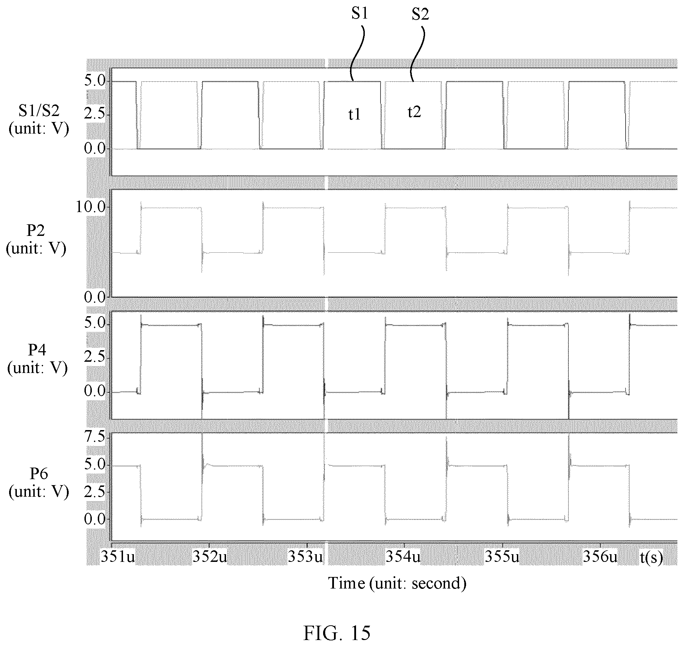

The following analyzes the circuit. As shown in FIG. 8 to FIG. 11, an example in which a voltage of an input end in is Vin and a voltage of an output end out is Vout is used for analysis. In FIG. 9, it can be seen that the second capacitor unit C2 is connected in parallel to the load, and therefore voltages of the second capacitor and the load are the same. In other words, a voltage Vc2 of the second capacitor unit C2 is equal to Vout. Similarly, in FIG. 11, it can be seen that the third capacitor unit C3 is connected in parallel to the load, and therefore voltages of the third capacitor and the load are the same. In other words, a voltage Vc3 of the third capacitor unit C3 is equal to Vout. In FIG. 9, a voltage obtained by connecting the first capacitor unit C1, the second capacitor unit C2, and the third capacitor unit C3 in series is Vin. In other words, Vin = Vc1+Vc2+Vc3, where Vc1 is a voltage of the first capacitor unit. It can be learned from FIG. 11 that Vc1 = Vc2+Vout. Vc2 = Vout, Vc3 = Vout, and Vc1 = Vc2+Vout are substituted into Vin = Vc1+Vc2+Vc3, to obtain Vin = 4 Vout. In other words, a voltage gain Vin: Vout = 4:1. According to power conservation, a relationship between an input current Iin and an output current Iout is Iin = Iout/4. As shown in FIG. 13, simulation is performed in a case in which the input voltage Vin is equal to 20 V. It can be learned that the voltage Vc3 of the third capacitor unit C3 is equal to the output voltage, the voltage Vc2 of the second capacitor unit C2 is equal to the output voltage, the voltage Vc1 of the first capacitor unit C1 is equal to twice the output voltage, and the output voltage Vout is approximately equal to 1/4 of the input voltage Vin. Due to impact of impedance of a component used in simulation, a parasitic capacitance, and an inductor, the output voltage Vout is approximately equal to a theoretical value 5 V, and there is a specific deviation. It should be noted that in an actual working process of a circuit, a voltage value corresponding to each component or node dynamically changes. Therefore, the voltage in embodiments of this application is an average voltage. It can be learned that the voltage conversion circuit in embodiments of this application can implement a voltage gain of 4:1, and an actual simulation result is consistent with a theoretical analysis. As shown in FIG. 14 and FIG. 15, FIG. 14 shows voltage waveforms corresponding to the signal S1, the signal S2, the fifth node P5, the third node P3, and the first node P1, and FIG. 15 shows voltage waveforms corresponding to the signal S1, the signal S2, the second node P2, the fourth node P4, and the sixth node P6. A voltage difference between the third node P3 and the first node P1 is the voltage Vc1 of the first capacitor unit C1, and Vc1 = 10 V In other words, a withstand voltage of the first capacitor unit C1 may be twice Vout. A voltage difference between the fifth node P5 and the sixth node P6 is the voltage Vc3 of the third capacitor unit C3, and Vc3 = 5 V. In other words, a withstand voltage of the third capacitor unit C3 may be Vout. A voltage difference between the second node P2 and the fourth node P4 is the voltage Vc2 of the second capacitor unit C2, and Vc2 = 5 V In other words, a withstand voltage of the second capacitor unit C2 may be Vout. It can be learned that a voltage relationship between nodes is consistent with the theoretical analysis. In addition, a voltage difference between the first node P1 and the input end in is 0 V to 10 V. In other words, a withstand voltage of the first switch unit Q1 connected in series between the first node P1 and the input end in may be twice Vout. A voltage difference between the first node P1 and the second node P2 is 15 V to 0 V In other words, a withstand voltage of the second switch unit Q2 connected in series between the first node P1 and the second node P2 may be 3 times Vout. A voltage difference between the third node P3 and the fifth node P5 is 0 V to 5 V In other words, a withstand voltage of the third switch unit Q3 connected in series between the third node P3 and the fifth node P5 may be Vout. A voltage difference between the third node P3 and the ground end is 0 V to 10 V. In other words, a withstand voltage of the fourth switch unit Q4 connected in series between the third node P3 and the ground end may be twice Vout. A voltage difference between the fifth node P5 and the output end out is 0 V to 5 V. In other words, a withstand voltage of the fifth switch unit Q5 connected in series between the fifth node P5 and the output end out may be Vout. A voltage difference between the sixth node P6 and the output end out is 0 V to 5 V. In other words, a withstand voltage of the sixth switch unit Q6 connected in series between the sixth node P6 and the output end out may be Vout. A voltage difference between the sixth node P6 and the ground end is 0 V to 5 V In other words, a withstand voltage of the seventh switch unit Q7 connected in series between the sixth node P6 and the ground end may be Vout. A voltage difference between the second node P2 and the output end out is 0 V to 5 V. In other words, a withstand voltage of the eighth switch unit Q8 connected in series between the second node P2 and the output end out may be Vout. A voltage difference between the fourth node P4 and the output end out is 0 V to 5 V In other words, a withstand voltage of the ninth switch unit Q9 connected in series between the fourth node P4 and the output end out may be Vout. A voltage difference between the fourth node P4 and the ground end is 0 V to 5 V. In other words, a withstand voltage of the tenth switch unit Q10 connected in series between the fourth node P4 and the ground end may be Vout. In addition, it can be seen from FIG. 8 and FIG. 10 that regardless of the first time period t1 or the second time period t2, currents corresponding to the first capacitor unit C1, the second capacitor unit C2, and the third capacitor unit C3 each passes through only one switch unit, and a case in which currents corresponding to two capacitor units pass through a same switch unit does not occur. Therefore, currents are evenly distributed, and average currents corresponding to all switch units are equal. Therefore, a severe heat generation problem caused by uneven current distribution is resolved. In addition, because there is no large current, a conduction loss depends on impedance, and the impedance is positively correlated with a current value, the conduction loss of the entire circuit is small.

As shown in Table 1, Table 1 is a table of parameter comparison between a voltage conversion circuit (the voltage conversion circuit in FIG. 7) in embodiments of this application and a Dickson Dickson converter (the Dickson Dickson converter in FIG. 2) in the conventional technology.

**Table 1**

| Circuit structure | Quantity of switch units | Withstand voltages of switch units | Currents of switch units | Withstand voltages of capacitor units | Summary |
|---|---|---|---|---|---|
| Voltage conversion circuit in FIG. 7 | 8 | Withstand voltages of two switch units are 2 Vout and withstand voltages of six switch units are Vout | Currents of two switch units are two times reference values, and currents of six switch units are reference values | Vout/2 Vout/3 Vout | High capacitor withstand voltages and uneven current distribution |
| Dickson Dickson converter in FIG. 2 | 10 | Withstand voltages of two switch units are 2 Vout, withstand voltage of one switch unit is 3 Vout, and withstand voltages of seven switch units are Vout | Currents of all switch units are reference values | Vout/Vout/2 Vout | Low capacitor withstand voltages and even current distribution |

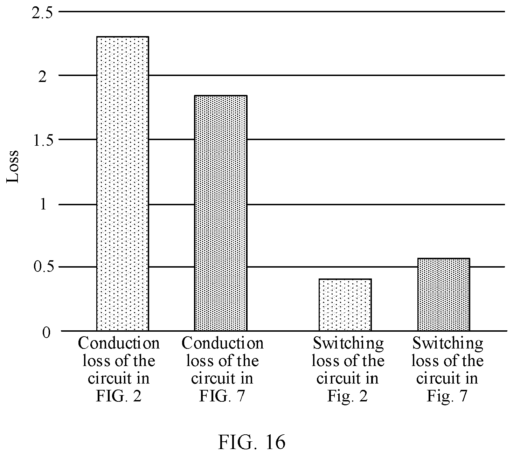

In one aspect, because currents of the voltage conversion circuit in embodiments of this application are evenly distributed, FIG. 16 shows a schematic diagram of loss comparison between a circuit (the voltage conversion circuit in embodiments of this application) corresponding to FIG. 7 and a circuit (the Dickson Dickson converter in the conventional technology) corresponding to FIG. 2. The two circuits are obtained through simulation with an input voltage of 20 V and an output current of 16 A. It can be learned that for a scenario with a large current, in embodiments of this application, a conduction loss of the voltage conversion circuit is greatly decreased, and a switching loss slightly increases. Because the increase in the switching loss is less than the decrease in the conduction loss, an overall loss is reduced. Compared with the circuit shown in FIG. 2, overall efficiency of the voltage conversion circuit in embodiments of this application is improved by about 0.7%.

In another aspect, as shown in FIG. 4 and FIG. 9, compared with the conventional technology, for the voltage conversion circuit in embodiments of this application, in the first time period t1, a quantity of capacitor units connected in series between the input end in and the output end out is increased by one. Therefore, a withstand voltage requirement for each capacitor unit is lowered. In the conventional technology (FIG. 2 to FIG. 6), a withstand voltage of C03 is three times Vout, and the withstand voltage of each capacitor unit in embodiments of this application (FIG. 7 to FIG. 11) is less than three times Vout. For example, the withstand voltage of the first capacitor unit C1 may be twice Vout, the withstand voltage of the third capacitor unit C3 may be Vout, and the withstand voltage of the second capacitor unit C2 may be Vout. A lower requirement for a withstand voltage can reduce a volume of a capacitor unit.

According to the voltage conversion circuit in embodiments of this application, a connection relationship between a switch unit and a capacitor unit makes currents distribute more evenly in a working process of the voltage conversion circuit. Therefore, a severe heat generation problem caused by uneven current distribution is resolved, the conduction loss is reduced, and the withstand voltage of the capacitor unit is lowered, thereby reducing the volume of the capacitor unit, and improving space utilization.

In a possible implementation, the first switch unit Q1, the second switch unit Q2, the third switch unit Q3, the fourth switch unit Q4, the fifth switch unit Q5, the sixth switch unit Q6, the seventh switch unit Q7, the eighth switch unit Q8, the ninth switch unit Q9, and the tenth switch unit Q10 are metal-oxide-semiconductor field-effect transistors (Metal-Oxide-Semiconductor Field-Effect Transistors, MOSFETs), gallium nitride GaN transistors, silicon carbide SiC transistors, insulated gate bipolar transistors (Insulated Gate Bipolar Transistors, IGBTs), or relays. It may be understood that specific implementations of the switch units are merely an example, provided that the switch units each can be controlled to implement a switch function. For example, each switch unit is a MOSFET. Each switch unit is an independent transistor to implement the switch function, a type of the transistor is not limited, for example, the transistor may be a P-type transistor or an N-type transistor. In another possible implementation, a specific structure of each switch unit is not limited in embodiments of this application, provided that the switch function can be implemented. For example, any one of the switch units may include a plurality of transistors connected in parallel or in series. When the plurality of transistors in the switch unit are all controlled to be turned on, the switch unit is turned on, and when the plurality of transistors in the switch unit are all controlled to be turned off, the switch unit is turned off.

In addition, specific structures of the first capacitor unit C1, the second capacitor unit C2, and the third capacitor unit C3 are also not limited in embodiments of this application, provided that a capacitor function can be implemented. For example, any one of the capacitor units may include a plurality of capacitors connected in parallel or in series.

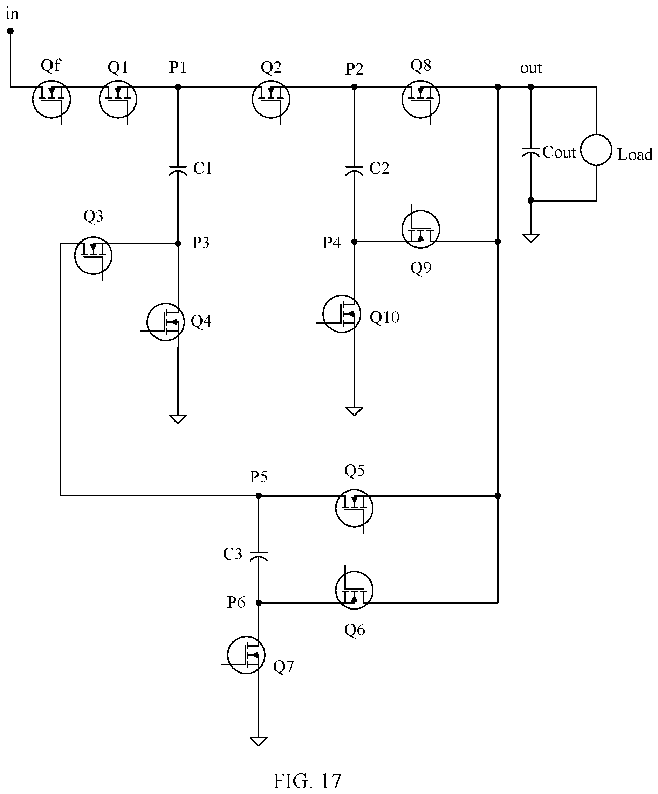

In a possible implementation, as shown in FIG. 17, the voltage conversion circuit further includes an anti-backflow transistor Qf connected in series between the input end in and the first switch unit Q1, where a direction of a parasitic diode (not shown in the figure) of the anti-backflow transistor Qf is a first direction, a direction of a parasitic diode (not shown in the figure) of the first switch unit Q1 is a second direction, and the first direction is opposite to the second direction. Parasitic diodes connected in parallel are generally disposed on a transistor. Therefore, to avoid a current flowing back through the parasitic diodes when the voltage conversion circuit works, the anti-backflow transistor Qf may be disposed between the input end in and the first switch unit Q1. For example, if the direction of the parasitic diode of the first switch unit Q1 is from the input end in to the first node P1, the direction of the parasitic diode of the anti-backflow transistor Qf is set to be from the first node P1 to the input end in. In a working process of the voltage conversion circuit, the anti-backflow transistor Qf is controlled to be turned on, to avoid impact of the anti-backflow transistor Qf on the working process of the circuit, and only the parasitic diode of the anti-backflow transistor Qf is used to implement an anti-backflow function.

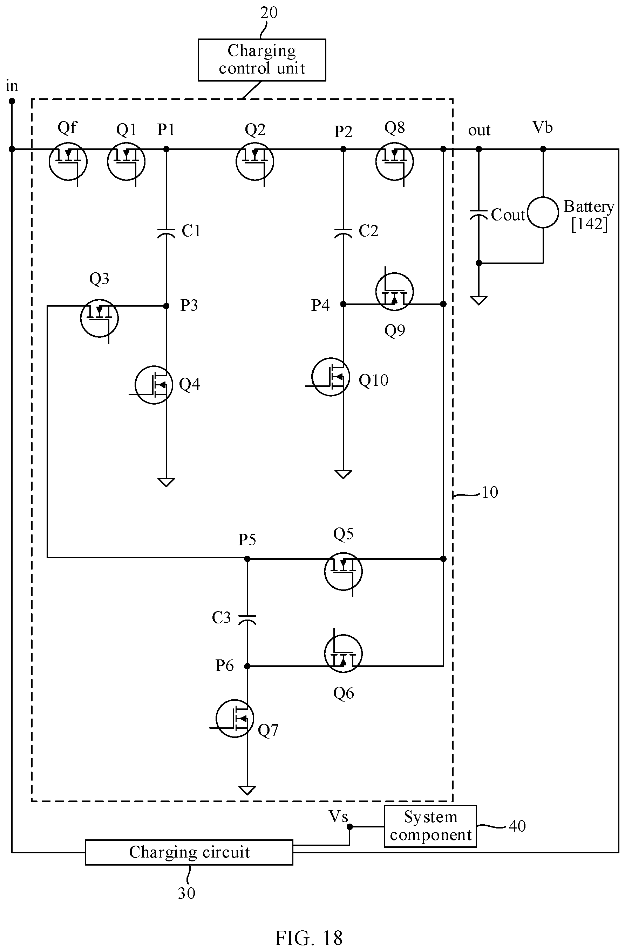

As shown in FIG. 18, an embodiment of this application further provides a charging management module, including: a voltage conversion circuit 10 in the foregoing embodiments, where an output end out of the voltage conversion circuit 10 is electrically connected to a battery charging/discharging end Vb, where the battery charging/discharging end Vb is configured to electrically connect to a positive electrode of the battery, and a negative electrode of the battery is grounded; and a charging control unit 20, where the charging control unit 20 is electrically connected to a control end of each switch unit in the voltage conversion circuit 10, and the charging control unit 20 is configured to control the voltage conversion circuit 10 to be in a working state or a non-working state. The charging management module may be the charging management module 140 in FIG. 1.

In a possible implementation, as shown in FIG. 12 and FIG. 18, when the voltage conversion circuit 10 is in the working state, the voltage conversion circuit 10 works in a plurality of cyclic time periods T. Each time period T sequentially includes a first time period t1 and a second time period t2. In the first time period t1, the charging control unit 20 is configured to provide a conductive electrical level for control ends of the first switch unit Q1, the third switch unit Q3, the sixth switch unit Q6, the eighth switch unit Q8, and the tenth switch unit Q10, and provide a cutoff electrical level for control ends of the second switch unit Q2, the fourth switch unit Q4, the fifth switch unit Q5, the seventh switch unit Q7, and the ninth switch unit Q9. In the second time period t2, the charging control unit 20 is configured to: provide the cutoff electrical level for the control ends of the first switch unit Q1, the third switch unit Q3, the sixth switch unit Q6, the eighth switch unit Q8, and the tenth switch unit Q10, and provide the conductive electrical level for the control ends of the second switch unit Q2, the fourth switch unit Q4, the fifth switch unit Q5, the seventh switch unit Q7, and the ninth switch unit Q9. When the voltage conversion circuit 10 is in the non-working state, the charging control unit 20 is configured to provide the cutoff electrical level for the control ends of the first switch unit Q1, the second switch unit Q2, the third switch unit Q3, the fourth switch unit Q4, the fifth switch unit Q5, the sixth switch unit Q6, the seventh switch unit Q7, the eighth switch unit Q8, the ninth switch unit Q9, and the tenth switch unit Q10.

Specifically, for example, when each switch unit is a MOSFET, a control end of the switch unit is a gate of the MOSFET. For an N-type MOSFET, the conductive electrical level is a high electrical level, and the cutoff electrical level is a low electrical level. For a P-type MOSFET, the conductive electrical level is the low electrical level, and the cutoff electrical level is the high electrical level. For example, it is assumed that each switch unit is the N-type MOSFET, in the first time period t1, the high electrical level is output to gates of Q1, Q3, Q6, Q8, and Q10, to control these transistors to be turned on, and the low electrical level is output to gates of Q2, Q4, Q5, Q7, and Q9, to control these transistors to be turned off. In the second time period t2, the low electrical level is output to the gates of Q1, Q3, Q6, Q8, and Q10, to control these transistors to be turned off, and the high electrical level is output to the gates of Q2, Q4, Q5, Q7, and Q9, to control these transistors to be turned on. The first time period t1 and the second time period t2 alternate gradually, to enable the voltage conversion circuit 10 to be in the working state to implement a voltage conversion function. When the low electrical level is continuously output to the gates of Q1 to Q10, these transistors may be controlled to be turned off. In other words, the voltage conversion circuit 10 is controlled to be in the non-working state. In addition, it should be noted that FIG. 17 further shows an anti-backflow transistor Qf. For example, the anti-backflow transistor Qf is an N-type transistor. When the voltage conversion circuit 10 is in the working state, the charging control unit 20 may provide the high electrical level for the gate of Qf, to control the anti-backflow transistor Qf to be turned on. When the voltage conversion circuit 10 is in the non-working state, the charging control unit 20 may provide the low electrical level for the gate of Qf, to control Qf to be turned off. In addition, if the anti-backflow transistor Qf is controlled to be turned off, the voltage conversion circuit may also be in the non-working state.

In a possible implementation, as shown in FIG. 18, the charging management module further includes: a charging circuit 30, where the charging circuit 30 is electrically connected to an input end in, the battery charging/discharging end Vb, a system working voltage end Vs, and the charging control unit 20. The charging control unit 20 is configured to control, in a constant current (Constant Current, CC) charging mode, the voltage conversion circuit 10 to be in the working state, and charge a battery 142 in the CC charging mode through the voltage conversion circuit 10 provided in this embodiment of this application. The charging control unit 20 is further configured to control, in a constant voltage (Constant Voltage, CV) charging mode, the voltage conversion circuit 10 to be in the non-working state, and the charging circuit 30 to provide a charging voltage for the charging/discharging end Vb of the battery, that is, charge the battery 142 in the CV charging mode through the charging circuit 30. In the CC charging mode, a charging current is large. The voltage conversion circuit 10 is used to charge the battery 142, so that a loss can be reduced to a greater extent. In the CV charging mode, a charging current is small. The charging circuit 30 is used to charge the battery 142, so that a charging voltage can be more stable by using a feedback adjustment function in the charging circuit 30.

In a possible implementation, as shown in FIG. 18, the charging management module further includes a charging circuit 30, where the charging circuit 30 is electrically connected to an input end in, the battery charging/discharging end Vb, the system working voltage end Vs, and a charging control unit 20. The charging control unit 20 is configured to control, in a constant current CC charging mode and when a charging current is greater than a preset value, the voltage conversion circuit 10 to be in the working state. The charging control unit 20 is further configured to control, in the constant current CC charging mode, when the charging current is not greater than the preset value, and in a constant voltage CV charging mode, the voltage conversion circuit 10 to be in the non-working state, and the charging circuit 30 to provide a charging voltage for the battery charging/discharging end Vb. In the CC charging mode, the charging current may still change. Therefore, switching between the voltage conversion circuit 10 and the charging circuit 30 may alternatively be controlled only based on a charging current value. When the charging current is large, the voltage conversion circuit 10 is used to charge the battery 142, so that a loss can be reduced to a greater extent. When the charging current is small, the charging circuit 30 is used to charge the battery 142, so that the charging voltage is more stable.

In addition, it should be noted that in a trickling charging mode, the voltage conversion circuit 10 may be controlled to be in the non-working state, and the charging circuit 30 may be controlled to provide the charging voltage for the battery charging/discharging end Vb. The charging circuit 30 may include another circuit having a charging and discharging function, like a Buck Buck circuit, a Boost Boost circuit, or a BUCK-BOOST circuit.

In a possible implementation, as shown in FIG. 18, the charging circuit 30 is further electrically connected to a system working voltage end Vs, and the charging circuit 30 is further configured to provide a working voltage for the system working voltage end Vs. In other words, the electronic device further includes a system component 40 electrically connected to the system working voltage end Vs. In other words, the charging circuit 30 is further configured to supply power to the system component 40.

As shown in FIG. 1, an embodiment of this application further provides an electronic device, including the foregoing voltage conversion circuit 10 or the foregoing charging management module 140. Specific structures and principles of the voltage conversion circuit 10 and the charging management module 140 are the same as the specific structures and principles in the foregoing embodiments, and details are not described herein again. The electronic device in embodiments of this application may be used in any scenario in which voltage conversion is required, for example, a server, a data center, or a direct current power supply.

In embodiments of this application, "at least one" means one or more, and "a plurality of" means two or more. The term "and/or" describes an association relationship between associated objects, and indicates that there may be three relationships. For example, A and/or B may indicate the following cases: There is only A, there are both A and B, and there is only B. A and B may be singular or plural. The character "/" generally indicates an "or" relationship between the associated objects. "At least one of the following items" or a similar expression indicates any combination of these items, including a single item or any combination of a plurality of items. For example, at least one of a, b, or c may indicate a, b, c, a-b, a-c, b-c, or a-b-c, where a, b, and c may be singular or plural.

The foregoing descriptions are merely preferred embodiments of this application, but are not intended to limit this application. For a person skilled in the art, various modifications and variations may be made in this application. The scope of protection is only limit by the appended claims.

## Claims

1. A voltage conversion circuit, comprising:
a first switch unit (Q1), wherein a first end of the first switch unit (Q1) is electrically connected to an input end;
a second switch unit (Q2), wherein a first end of the second switch unit (Q2) is electrically connected to a second end of the first switch unit (Q1);
a first capacitor unit (C1), wherein a first end of the first capacitor unit (C1) is electrically connected to the second end of the first switch unit (Q1);
a second capacitor unit (C2), wherein a first end of the second capacitor unit (C2) is electrically connected to a second end of the second switch unit (Q2);
a third switch unit (Q3), wherein a first end of the third switch unit (Q3) is electrically connected to a second end of the first capacitor unit (C1);
a fourth switch unit (Q4), wherein a first end of the fourth switch unit (Q4) is electrically connected to the second end of the first capacitor unit (C1), and a second end of the fourth switch unit (Q4) is electrically connected to a ground end;
a fifth switch unit (Q5), wherein a first end of the fifth switch unit (Q5) is electrically connected to a second end of the third switch unit (Q3);
a third capacitor unit (C3), wherein a first end of the third capacitor unit (C3) is electrically connected to the second end of the third switch unit (Q3);
a sixth switch unit (Q6), wherein a first end of the sixth switch unit (Q6) is electrically connected to a second end of the third capacitor unit (C3), and a second end of the sixth switch unit (Q6) is electrically connected to a second end of the fifth switch unit (Q5);
a seventh switch unit (Q7), wherein a first end of the seventh switch unit (Q7) is electrically connected to the second end of the third capacitor unit (C3), and a second end of the seventh switch unit (Q7) is electrically connected to the ground end;
an eighth switch unit (Q8), wherein a first end of the eighth switch unit (Q8) is electrically connected to the second end of the second switch unit (Q2), and a second end of the eighth switch unit (Q8) is electrically connected to an output end (out);
a ninth switch unit (Q9), wherein a first end of the ninth switch unit (Q9) is electrically connected to a second end of the second capacitor unit (C2), and a second end of the ninth switch unit (Q9) is electrically connected to the output end (out) and electrically connected to the second end of the fifth switch (Q5); and
a tenth switch unit (Q10), wherein a first end of the tenth switch unit (Q10) is electrically connected to the second end of the second capacitor unit (C2), and a second end of the tenth switch unit (Q10) is electrically connected to the ground end,
wherein
when the voltage conversion circuit is in a working state, the voltage conversion circuit is configured to work in a plurality of cyclic time periods, wherein each time period sequentially comprises a first time period and a second time period;
**characterized in that:**
the voltage conversion circuit is configured such that, in the first time period, the first switch unit (Q1), the third switch unit (Q3), the sixth switch unit (Q6), the eighth switch unit (Q8), and the tenth switch unit (Q10) are in an ON state, and the second switch unit (Q2), the fourth switch unit (Q4), the fifth switch unit (Q5), the seventh switch unit (Q7), and the ninth switch unit (Q9) are in an OFF state, and
in the second time period, the first switch unit (Q1), the third switch unit (Q3), the sixth switch unit (Q6), the eighth switch unit (Q8), and the tenth switch unit (Q10) are in an OFF state, and the second switch unit (Q2), the fourth switch unit (Q4), the fifth switch unit (Q5), the seventh switch unit (Q7), and the ninth switch unit (Q9) are in an ON state.

2. The voltage conversion circuit according to claim 1, wherein
the first switch unit (Q1), the second switch unit (Q2), the third switch unit (Q3), the fourth switch unit (Q4), the fifth switch unit (Q5), the sixth switch unit (Q6), the seventh switch unit (Q7), the eighth switch unit (Q8), the ninth switch unit (Q9), and the tenth switch unit (Q10) are metal-oxide-semiconductor field-effect transistors, MOSFETs, gallium nitride GaN transistors, silicon carbide SiC transistors, insulated gate bipolar transistors IGBTs, or relays.

3. The voltage conversion circuit according to claim 2, further comprising:
an anti-backflow transistor connected (Qf) in series between the input end and the first switch unit (Q1), wherein a direction of a parasitic diode of the anti-backflow transistor (Qf) is a first direction, a direction of a parasitic diode of the first switch unit (Q1) is a second direction, and the first direction is opposite to the second direction.

4. A charging management module, comprising:
the voltage conversion circuit (10) according to any one of claims 1 to 3, wherein an output end of the voltage conversion circuit is electrically connected to a battery charging/discharging end (Vb); and
a charging control unit (20), wherein the charging control unit (20) is electrically connected to a control end of each switch unit in the voltage conversion circuit (10), and the charging control unit (20) is configured to control the voltage conversion circuit (10) to be in a working state or a non-working state.

5. The charging management module according to claim 4, wherein
when the voltage conversion circuit (10) is in the non-working state, the charging control unit (20) is configured to provide a cutoff electrical level for the control ends of the first switch unit (Q1), the second switch unit (Q2), the third switch unit (Q3), the fourth switch unit (Q4), the fifth switch unit (Q5), the sixth switch unit (Q6), the seventh switch unit (Q7), the eighth switch unit (Q8), the ninth switch unit (Q9), and the tenth switch unit (Q10).

6. The charging management module according to claim 4, further comprising:
a charging circuit (30) , wherein the charging circuit (30) is electrically connected to an input end, the battery charging/discharging end, a system working voltage end, and the charging control unit; and
the charging control unit (20) is configured to control, in a constant current charging mode, the voltage conversion circuit (10) to be in the working state, and the charging control unit (20) is further configured to control, in a constant voltage charging mode, the voltage conversion circuit (10) to be in the non-working state and the charging circuit (30) to provide a charging voltage for the battery charging/discharging end.

7. The charging management module according to claim 4, further comprising:
a charging circuit (30) , wherein the charging circuit (30) is electrically connected to an input end, the battery charging/discharging end; and the charging control unit (20) , wherein
the charging control unit (20) is configured to control, in a constant current charging mode and when a charging current is greater than a preset value, the voltage conversion circuit (10) to be in the working state, and the charging control unit (20) is further configured to control, in the constant current charging mode, when the charging current is not greater than the preset value, and in a constant voltage charging mode, the voltage conversion circuit (10) to be in the non-working state and the charging circuit (30) to provide a charging voltage for the battery charging/discharging end.

8. The charging management module according to claim 6 or 7, wherein
the charging circuit (30) is further electrically connected to the system working voltage end, and the charging circuit (30) is further configured to provide a working voltage for the system working voltage end.

9. An electronic device, comprising the voltage conversion circuit according to any one of claims 1 to 3 or the charging management module according to any one of claims 4 to 8.

## Patentansprüche

1. Spannungswandlerschaltung, umfassend:
eine erste Schalteinheit (Q1), wobei ein erstes Ende der ersten Schalteinheit (Q1) elektrisch mit einem Eingabeende verbunden ist;
eine zweite Schalteinheit (Q2), wobei ein erstes Ende der zweiten Schalteinheit (Q2) elektrisch mit einem zweiten Ende der ersten Schalteinheit (Q1) verbunden ist;
eine erste Kondensatoreinheit (C1), wobei ein erstes Ende der ersten Kondensatoreinheit (C1) elektrisch mit dem zweiten Ende der ersten Schalteinheit (Q1) verbunden ist;
eine zweite Kondensatoreinheit (C2), wobei ein erstes Ende der zweiten Kondensatoreinheit (C2) elektrisch mit einem zweiten Ende der zweiten Schalteinheit (Q2) verbunden ist;
eine dritte Schalteinheit (Q3), wobei ein erstes Ende der dritten Schalteinheit (Q3) elektrisch mit einem zweiten Ende der ersten Kondensatoreinheit (C1) verbunden ist;
eine vierte Schalteinheit (Q4), wobei ein erstes Ende der vierten Schalteinheit (Q4) elektrisch mit dem zweiten Ende der ersten Kondensatoreinheit (C1) verbunden ist und ein zweites Ende der vierten Schalteinheit (Q4) elektrisch mit einem Erdungsende verbunden ist;
eine fünfte Schalteinheit (Q5), wobei ein erstes Ende der fünften Schalteinheit (Q5) elektrisch mit einem zweiten Ende der dritten Schalteinheit (Q3) verbunden ist;
eine dritte Kondensatoreinheit (C3), wobei ein erstes Ende der dritten Kondensatoreinheit (C3) elektrisch mit dem zweiten Ende der dritten Schalteinheit (Q3) verbunden ist;
eine sechste Schalteinheit (Q6), wobei ein erstes Ende der sechsten Schalteinheit (Q6) elektrisch mit einem zweiten Ende der dritten Kondensatoreinheit (C3) verbunden ist und ein zweites Ende der sechsten Schalteinheit (Q6) elektrisch mit einem zweiten Ende der fünften Schalteinheit (Q5) verbunden ist;
eine siebte Schalteinheit (Q7), wobei ein erstes Ende der siebten Schalteinheit (Q7) elektrisch mit dem zweiten Ende der dritten Kondensatoreinheit (C3) verbunden ist und ein zweites Ende der siebten Schalteinheit (Q7) elektrisch mit dem Erdungsende verbunden ist;
eine achte Schalteinheit (Q8), wobei ein erstes Ende der achten Schalteinheit (Q8) elektrisch mit dem zweiten Ende der zweiten Schalteinheit (Q2) verbunden ist und ein zweites Ende der achten Schalteinheit (Q8) elektrisch mit einem Ausgabeende (out) verbunden ist;
eine neunte Schalteinheit (Q9), wobei ein erstes Ende der neunten Schalteinheit (Q9) elektrisch mit einem zweiten Ende der zweiten Kondensatoreinheit (C2) verbunden ist und ein zweites Ende der neunten Schalteinheit (Q9) elektrisch mit dem Ausgabeende (out) verbunden und elektrisch mit dem zweiten Ende des fünften Schalters (Q5) verbunden ist; und
eine zehnte Schalteinheit (Q10), wobei ein erstes Ende der zehnten Schalteinheit (Q10) elektrisch mit dem zweiten Ende der zweiten Kondensatoreinheit (C2) verbunden ist und ein zweites Ende der zehnten Schalteinheit (Q10) elektrisch mit dem Erdungsende verbunden ist,
wobei
wenn sich die Spannungswandlerschaltung in einem Arbeitszustand befindet, die Spannungswandlerschaltung dazu konfiguriert ist, in einer Vielzahl zyklischer Zeiträume zu arbeiten, wobei jeder Zeitraum sequenziell einen ersten Zeitraum und einen zweiten Zeitraum umfasst;
**dadurch gekennzeichnet, dass:**
die Spannungswandlerschaltung derart konfiguriert ist, dass sich in dem ersten Zeitraum die erste Schalteinheit (Q1), die dritte Schalteinheit (Q3), die sechste Schalteinheit (Q6), die achte Schalteinheit (Q8) und die zehnte Schalteinheit (Q10) in einem EIN-Zustand befinden und sich die zweite Schalteinheit (Q2), die vierte Schalteinheit (Q4), die fünfte Schalteinheit (Q5), die siebte Schalteinheit (Q7) und die neunte Schalteinheit (Q9) in einem AUS-Zustand befinden; und
sich in dem zweiten Zeitraum die erste Schalteinheit (Q1), die dritte Schalteinheit (Q3), die sechste Schalteinheit (Q6), die achte Schalteinheit (Q8) und die zehnte Schalteinheit (Q10) in einem AUS-Zustand befinden und sich die zweite Schalteinheit (Q2), die vierte Schalteinheit (Q4), die fünfte Schalteinheit (Q5), die siebte Schalteinheit (Q7) und die neunte Schalteinheit (Q9) in einem EIN-Zustand befinden.

2. Spannungswandlerschaltung nach Anspruch 1, wobei
die erste Schalteinheit (Q1), die zweite Schalteinheit (Q2), die dritte Schalteinheit (Q3), die vierte Schalteinheit (Q4), die fünfte Schalteinheit (Q5), die sechste Schalteinheit (Q6), die siebte Schalteinheit (Q7), die achte Schalteinheit (Q8), die neunte Schalteinheit (Q9) und die zehnte Schalteinheit (Q10) Metall-Oxid-Halbleiter-Feldeffekttransistoren, MOSFETs, Galliumnitrid-Transistoren, GaN-Transistoren, Siliciumcarbid-Transistoren, SiC-Transistoren, Bipolartransistoren mit isoliertem Gate, IGBTs, oder Relais sind.

3. Spannungswandlerschaltung nach Anspruch 2, ferner umfassend:
einen Anti-Backflow-Transistor (Qf), der in Reihe zwischen dem Eingabeende und der ersten Schalteinheit (Q1) geschaltet ist, wobei eine Richtung einer parasitären Diode des Anti-Backflow-Transistors (Qf) eine erste Richtung ist, eine Richtung einer parasitären Diode der ersten Schalteinheit (Q1) eine zweite Richtung ist und die erste Richtung der zweiten Richtung entgegengesetzt ist.

4. Ladeverwaltungsmodul, umfassend:
die Spannungswandlerschaltung (10) nach einem der Ansprüche 1 bis 3, wobei ein Ausgabeende der Spannungswandlerschaltung elektrisch mit einem Batterielade-/-Entladeende (Vb) verbunden ist; und
eine Ladesteuereinheit (20), wobei die Ladesteuereinheit (20) elektrisch mit einem Steuerende jeder Schalteinheit in der Spannungswandlerschaltung (10) verbunden ist und die Ladesteuereinheit (20) dazu konfiguriert ist, die Spannungswandlerschaltung (10) zu steuern, um sich in einem Arbeitszustand oder einem Nicht-Arbeitszustand zu befinden.

5. Ladeverwaltungsmodul nach Anspruch 4, wobei
wenn sich die Spannungswandlerschaltung (10) in dem Nicht-Arbeitszustand befindet, die Ladesteuereinheit (20) dazu konfiguriert ist, einen elektrischen Abschaltpegel für die Steuerenden der ersten Schalteinheit (Q1), der zweiten Schalteinheit (Q2), der dritten Schalteinheit (Q3), der vierten Schalteinheit (Q4), der fünften Schalteinheit (Q5), der sechsten Schalteinheit (Q6), der siebten Schalteinheit (Q7), der achten Schalteinheit (Q8), der neunten Schalteinheit (Q9) und der zehnten Schalteinheit (Q10) bereitzustellen.

6. Ladeverwaltungsmodul nach Anspruch 4, ferner umfassend:
eine Ladeschaltung (30), wobei die Ladeschaltung (30) elektrisch mit einem Eingabeende, dem Batterielade-/-Entladeende, einem Systemarbeitsspannungsende und der Ladesteuereinheit verbunden ist; und
die Ladesteuereinheit (20) dazu konfiguriert ist, in einem Konstantstromlademodus die Spannungswandlerschaltung (10) zu steuern, um sich in dem Arbeitszustand zu befinden, und die Ladesteuereinheit (20) ferner dazu konfiguriert ist, in einem Konstantspannungslademodus die Spannungswandlerschaltung (10) zu steuern, um sich in dem Nicht-Arbeitszustand zu befinden, und die Ladeschaltung (30) zu steuern, um eine Ladespannung für das Batterielade-/-Entladeende bereitzustellen.

7. Ladeverwaltungsmodul nach Anspruch 4, ferner umfassend:
eine Ladeschaltung (30), wobei die Ladeschaltung (30) elektrisch mit einem Eingabeende, dem Batterielade-/-Entladeende und der Ladesteuereinheit (20) verbunden ist, wobei
die Ladesteuereinheit (20) dazu konfiguriert ist, in einem Konstantstromlademodus und wenn ein Ladestrom größer als ein voreingestellter Wert ist, die Spannungswandlerschaltung (10) zu steuern, um sich in dem Arbeitszustand zu befinden, und die Ladesteuereinheit (20) ferner dazu konfiguriert ist, in dem Konstantstromlademodus, wenn der Ladestrom nicht größer als der voreingestellte Wert ist, und in einem Konstantspannungslademodus die Spannungswandlerschaltung (10) zu steuern, um sich in dem Nicht-Arbeitszustand zu befinden, und die Ladeschaltung (30) zu steuern, um eine Ladespannung für das Batterielade-/-Entladeende bereitzustellen.

8. Ladeverwaltungsmodul nach Anspruch 6 oder 7, wobei
die Ladeschaltung (30) ferner elektrisch mit dem Systemarbeitsspannungsende verbunden ist und die Ladeschaltung (30) ferner dazu konfiguriert ist, eine Arbeitsspannung für das Systemarbeitsspannungsende bereitzustellen.

9. Elektronische Vorrichtung, umfassend die Spannungswandlerschaltung nach einem der Ansprüche 1 bis 3 oder das Ladeverwaltungsmodul nach einem der Ansprüche 4 bis 8.

## Revendications

1. Circuit de conversion de tension, comprenant :
une première unité de commutation (Q1), dans lequel une première extrémité de la première unité de commutation (Q1) est connectée électriquement à une extrémité d'entrée ;
une deuxième unité de commutation (Q2), dans lequel une première extrémité de la deuxième unité de commutation (Q2) est connectée électriquement à une seconde extrémité de la première unité de commutation (Q1) ;
une première unité de condensateur (C1), dans lequel une première extrémité de la première unité de condensateur (C1) est connectée électriquement à la seconde extrémité de la première unité de commutation (Q1) ;
une deuxième unité de condensateur (C2), dans lequel une première extrémité de la deuxième unité de condensateur (C2) est connectée électriquement à une seconde extrémité de la deuxième unité de commutation (Q2) ;
une troisième unité de commutation (Q3), dans lequel une première extrémité de la troisième unité de commutation (Q3) est connectée électriquement à une seconde extrémité de la première unité de condensateur (C1) ;
une quatrième unité de commutation (Q4), dans lequel une première extrémité de la quatrième unité de commutation (Q4) est connectée électriquement à la seconde extrémité de la première unité de condensateur (C1), et une seconde extrémité de la quatrième unité de commutation (Q4) est connectée électriquement à une extrémité de masse ;
une cinquième unité de commutation (Q5), dans lequel une première extrémité de la cinquième unité de commutation (Q5) est connectée électriquement à une seconde extrémité de la troisième unité de commutation (Q3) ;
une troisième unité de condensateur (C3), dans lequel une première extrémité de la troisième unité de condensateur (C3) est connectée électriquement à la seconde extrémité de la troisième unité de commutation (Q3) ;
une sixième unité de commutation (Q6), dans lequel une première extrémité de la sixième unité de commutation (Q6) est connectée électriquement à une seconde extrémité de la troisième unité de condensateur (C3), et une seconde extrémité de la sixième unité de commutation (Q6) est connectée électriquement à une seconde extrémité de la cinquième unité de commutation (Q5) ;
une septième unité de commutation (Q7), dans lequel une première extrémité de la septième unité de commutation (Q7) est connectée électriquement à la seconde extrémité de la troisième unité de condensateur (C3), et une seconde extrémité de la septième unité de commutation (Q7) est connectée électriquement à l'extrémité de masse ;
une huitième unité de commutation (Q8), dans lequel une première extrémité de la huitième unité de commutation (Q8) est connectée électriquement à la seconde extrémité de la deuxième unité de commutation (Q2), et une seconde extrémité de la huitième unité de commutation (Q8) est connectée électriquement à une extrémité de sortie (out) ;
une neuvième unité de commutation (Q9), dans lequel une première extrémité de la neuvième unité de commutation (Q9) est connectée électriquement à une seconde extrémité de la deuxième unité de condensateur (C2), et une seconde extrémité de la neuvième unité de commutation (Q9) est connectée électriquement à l'extrémité de sortie (out) et connectée électriquement à la seconde extrémité du cinquième commutateur (Q5) ; et
une dixième unité de commutation (Q10), dans lequel une première extrémité de la dixième unité de commutation (Q10) est connectée électriquement à la seconde extrémité de la deuxième unité de condensateur (C2), et une seconde extrémité de la dixième unité de commutation (Q10) est connectée électriquement à l'extrémité de masse,
dans lequel
lorsque le circuit de conversion de tension est dans un état de fonctionnement, le circuit de conversion de tension est configuré pour fonctionner dans une pluralité de périodes de temps cycliques, dans lequel chaque période de temps comprend séquentiellement une première période de temps et une seconde période de temps ;
**caractérisé en ce que** :
le circuit de conversion de tension est configuré de telle sorte que, dans la première période de temps, la première unité de commutation (Q1), la troisième unité de commutation (Q3), la sixième unité de commutation (Q6), la huitième unité de commutation (Q8) et la dixième unité de commutation (Q10) sont dans un état ON, et la deuxième unité de commutation (Q2), la quatrième unité de commutation (Q4), la cinquième unité de commutation (Q5), la septième unité de commutation (Q7), et la neuvième unité de commutation (Q9) sont dans un état OFF ; et
dans la seconde période de temps, la première unité de commutation (Q1), la troisième unité de commutation (Q3), la sixième unité de commutation (Q6), la huitième unité de commutation (Q8) et la dixième unité de commutation (Q10) sont dans un état OFF, et la deuxième unité de commutation (Q2), la quatrième unité de commutation (Q4), la cinquième unité de commutation (Q5), la septième unité de commutation (Q7), et la neuvième unité de commutation (Q9) sont dans un état ON.

2. Circuit de conversion de tension selon la revendication 1, dans lequel
la première unité de commutation (Q1), la deuxième unité de commutation (Q2), la troisième unité de commutation (Q3), la quatrième unité de commutation (Q4), la cinquième unité de commutation (Q5), la sixième unité de commutation (Q6), la septième unité de commutation (Q7), la huitième unité de commutation (Q8), la neuvième unité de commutation (Q9), et la dixième unité de commutation (Q10) sont des transistors à effet de champ métal-oxyde-semiconducteur, MOSFET, des transistors au nitrure de gallium GaN, des transistors au carbure de silicium SiC, des transistors bipolaires à grille isolée IGBT, ou des relais.

3. Circuit de conversion de tension selon la revendication 2, comprenant également :
un transistor anti-retour connecté (Qf) en série entre l'extrémité d'entrée et la première unité de commutation (Q1), dans lequel une direction d'une diode parasite du transistor anti-retour (Qf) est une première direction, une direction d'une diode parasite de la première unité de commutation (Q1) est une seconde direction, et la première direction est opposée à la seconde direction.

4. Module de gestion de charge, comprenant :
le circuit de conversion de tension (10) selon l'une quelconque des revendications 1 à 3, dans lequel une extrémité de sortie du circuit de conversion de tension est connectée électriquement à une extrémité de charge/décharge de batterie (Vb) ; et
une unité de commande de charge (20), dans lequel l'unité de commande de charge (20) est connectée électriquement à une extrémité de commande de chaque unité de commutation dans le circuit de conversion de tension (10), et l'unité de commande de charge (20) est configurée pour commander le circuit de conversion de tension (10) pour qu'il soit dans un état de fonctionnement ou un état de non-fonctionnement.

5. Module de gestion de charge selon la revendication 4, dans lequel
lorsque le circuit de conversion de tension (10) est dans l'état de non-fonctionnement, l'unité de commande de charge (20) est configurée pour fournir un niveau électrique de coupure pour les extrémités de commande de la première unité de commutation (Q1), de la deuxième unité de commutation (Q2), de la troisième unité de commutation (Q3), de la quatrième unité de commutation (Q4), de la cinquième unité de commutation (Q5), de la sixième unité de commutation (Q6), de la septième unité de commutation (Q7), de la huitième unité de commutation (Q8), de la neuvième unité de commutation (Q9) et de la dixième unité de commutation (Q10).

6. Module de gestion de charge selon la revendication 4, comprenant également :
un circuit de charge (30), dans lequel le circuit de charge (30) est connecté électriquement à une extrémité d'entrée, à l'extrémité de charge/décharge de la batterie, à une extrémité de tension de fonctionnement du système et à l'unité de commande de charge ; et
l'unité de commande de charge (20) est configurée pour commander, dans un mode de charge à courant constant, le circuit de conversion de tension (10) pour qu'il soit dans l'état de fonctionnement, et l'unité de commande de charge (20) est également configurée pour commander, dans un mode de charge à tension constante, le circuit de conversion de tension (10) pour qu'il soit dans l'état de non-fonctionnement et le circuit de charge (30) pour fournir une tension de charge pour l'extrémité de charge/décharge de la batterie.

7. Module de gestion de charge selon la revendication 4, comprenant également :
un circuit de charge (30), dans lequel le circuit de charge (30) est connecté électriquement à une extrémité d'entrée, à l'extrémité de charge/décharge de la batterie ; et à l'unité de commande de charge (20), dans lequel
l'unité de commande de charge (20) est configurée pour commander, dans un mode de charge à courant constant et lorsqu'un courant de charge est supérieur à une valeur prédéfinie, le circuit de conversion de tension (10) pour qu'il soit dans l'état de fonctionnement, et l'unité de commande de charge (20) est également configurée pour commander, dans le mode de charge à courant constant, lorsque le courant de charge n'est pas supérieur à la valeur prédéfinie, et dans un mode de charge à tension constante, le circuit de conversion de tension (10) pour qu'il soit dans l'état de non-fonctionnement et le circuit de charge (30) pour fournir une tension de charge pour l'extrémité de charge/décharge de la batterie.

8. Module de gestion de charge selon la revendication 6 ou 7, dans lequel
le circuit de charge (30) est également connecté électriquement à l'extrémité de tension de fonctionnement du système, et le circuit de charge (30) est également configuré pour fournir une tension de fonctionnement pour l'extrémité de tension de fonctionnement du système.

9. Dispositif électronique, comprenant le circuit de conversion de tension selon l'une quelconque des revendications 1 à 3 ou le module de gestion de charge selon l'une quelconque des revendications 4 à 8.
